Europäisches Patentamt

European Patent Office

Office européen des brevets

(19)

(11) Veröffentlichungsnummer: **0 436 832 A1**

(12) # EUROPÄISCHE PATENTANMELDUNG

(21) Anmeldenummer: 90123198.5

(22) Anmeldetag: 04.12.90

(51) Int. Cl.⁵: **B01J 39/04**, B01J 47/00

(30) Priorität: 09.12.89 DE 3940721
27.10.90 DE 4034269

(43) Veröffentlichungstag der Anmeldung:
**17.07.91 Patentblatt 91/29**

(84) Benannte Vertragsstaaten:
**AT BE CH DE FR IT LI LU**

(71) Anmelder: **Jacob Plein-Wagner Söhne Steinzeugwarenfabrik KG**

**W-5522 Speicher(DE)**

(72) Erfinder: **Hancke, Klaus, Prof. Dr. Ing.**
**Lessingstrasse 5**
**W-5558 Schweich(DE)**
Erfinder: **Plein, Hans Rudolf, Dipl.-Kfm.**
**Merscheider Weg 1**
**W-5522 Speicher(DE)**
Erfinder: **Kehm, Burkhard, Dipl.-Ing.**
**Moltkestrasse 3**
**W-5500 Trier(DE)**

(74) Vertreter: **Schönherr, Wolfgang et al**
**Patentanwälte Wolfgang Schönherr Dipl.-Ing.**
**Karl-Heinz Serwe Hawstrasse 28**
**W-5500 Trier(DE)**

(54) Verfahren und Vorrichtung zur Reinigung und Neutralisation von Abgaskondensaten.

(57)
1. Verfahren und Vorrichtung zur Reinigung und Neutralisation der Abgaskondensate von häuslichen Feuerstätten
2.1 Vor der Einleitung der agressiven Abgaskondensate in die kommunale Kanalisation muß eine Aufbereitung erfolgen.
2.2 Es wird vorgeschlagen, die Abgaskondensate einem schwachsauren Kationenaustauscherharz zuzuführen.

# VERFAHREN UND VORRICHTUNG ZUR REINIGUNG UND NEUTRALISATION VON ABGASKONDENSATEN

Die Erfindung betrifft ein Verfahren und eine Vorrichtung zur Reinigung und Neutralisation von Abgaskondensaten von häuslichen, mit fossilen Brennstoffen bei vorwiegend niedrigen Abgastemperaturen betriebenen Feuerstätten.

Zur besseren Nutzung der Energie fossiler Brennstoffe ist es notwendig, die Wärmeerzeuger mit gleitenden Temperaturen und niedrigen Abgastemperaturen (Rückkühlung des Abgases, Brennwerttechnik) zu betreiben. Daraus ergeben sich jedoch häufig Unterschreitungen des Taupunktes des Abgases sowohl im Wärmeerzeuger als auch im Schornstein, so daß ein sehr agressives Abgaskondensat anfällt.

Derartige Abgas-Kondensate weisen pH-Werte unter 4, als Korrosionsprodukte gelöste Metallionen und ungelöste Metallpartikel, ungelöste Rauchgasbestandteile und gelöste oder emulgierte Leichtstoffe auf.

Die Einleitung derartiger Abgaskondensate in die kommunalen Kanalisationen ist nicht zulässig, so daß eine Aufbereitung erfolgen muß.

Es ist bekannt, derartige Abgaskondensate durch Filtration über alkalische Filtermedien zu neutralisieren. Die Erfahrung zeigt jedoch, daß die Oberfläche der alkalischen Filtermedien innerhalb kürzester Zeit mit Gips- und Metallausscheidungen belegt und damit unwirksam wird.

Bei großindustriellen Rauchgasentstickungsanlagen von Kraftwerken ist es bekannt, die Ammoniumionen mittels eines aus Zeolith bestehenden Ionenaustauschers gegen Natriumionen auszutauschen. Ebenso ist es bekannt, bei großindustriellen Anlagen der Kohlevergasung das Abwasser von Gaskondensaten mit schwachsauren Kationenaustauschern zu behandeln. Gleichfalls bei großindustrieellen Anlagen ist es bekannt, Abgaskondensate von Verbrennungsabgasen durch Ionenaustausch zu reinigen.

Diese großindustriellen Reiniungsverfahren bedürfen einer stetigen überwachung, damit die Vorgänge in der vorgesehenen Form ablaufen. Derartige Reinigungsverfahren sind daher nicht im häuslichen Bereich einsetzbar.

Die Aufgabe der Erfindung besteht daher darin, ein Verfahren und eine Vorrichtung der eingangs genannten Art vorzuschlagen, mit dem mit geringen Kosten wirksam, bei hoher Standzeit und ohne stetige Wartung eine Neutralisation und Reinigung der Abgaskondensate von häuslichen Feuerstätten erfolgen kann.

Diese Aufgabe wird dadurch gelöst, daß die Abgaskondensate einem schwachsauren Kationenaustauscherharz auf Carbonsäurebasis in der Dinatriumionen-Beladungsform zugeführt werden.

Von besonderem Vorteil ist ein makroporöses Kationenaustauscherharz.

Vorteilhaft wird das Abgaskondensat zunächst Aktiv-Kohle und danach dem Kationenaustauscherharz zugeführt. Vorteilhaft wird das Abgaskondensat zunächst einem Absetzbecken zugeführt. Vorteilhaft wird das Abgaskondensat im Aufstrom dem Kationenaustauscherharz und/oder der Aktiv-Kohle zugeführt.

Eine vorteilhafte Vorrichtung zur Durchführung des Verfahrens ist gekennzeichnet durch ein unteres Absetzbecken mit einem Zulauf für das Abgaskondensat, darüber im Abstand angeordnete Aktiv-Kohle, einem darüber im Abstand angeordneten Kationaustauscherharz und einem oberen Ablauf für das gereinigte und neutralisierte Abgaskondensat.

Vorteilhaft hat die Vorrichtung zylinderförmige, dicht aufeinandersetztbare Ringe, von denen einige einen siebartigen Boden zur Aufnahme der Aktiv-Kohle, des granulierten Kationenaustauscherharzes od.dgl. haben und von denen ein unterer und ein oberer Ring einen Boden bzw. Deckel und einen Zulauf bzw. einen Ablauf für das Abgaskondensat haben.

Vorteilhaft sind die Ringe durch umlaufende Dichtungen mit Hilfe von Schnappverbindungen dicht aufeinandersetzbar.

Bei einer vorteilhaften weiteren Ausführungsform einer Vorrichtung zur Durchführung des Verfahrens ist ein Behälter zur Aufnahme des Kationenaustauscherharzes vorgesehen, der einen von der Behälteroberseite bis nahe zum Behälterboden reichenden Zulauf mit einer unteren Einlauföffnung in den Behälter für das zulaufende Kondensat und eine obere Austrittsöffnung für das neutralisierte Kondensat hat.

Vorteilhaft sind an der Einlauföffnung und/oder der Austrittsöffnung Siebe angeordnet. Vorteilhaft ist das Sieb an der Einlauföffnung sich trichterartig verbreiternd ausgebildet.

Vorzugsweise sind sowohl der Zulauf als auch die Austrittsöffnung in einem mit dem Behälter lösbar verbundenen Deckel angeordnet.

In der Zeichnung sind zwei erfindungsgemäße Vorrichtungen beispielhaft dargestellt. Es zeigen:

Fig. 1 die aus aufeinander gesetzten Ringen bestehende Vorrichtung im Schnitt

Fig. 2 die Verbindung zweier Ringe im Detail im Schnitt und

Fig. 3 eine andere Ausführungsform einer erfindungsgemäßen Vorrichtung.

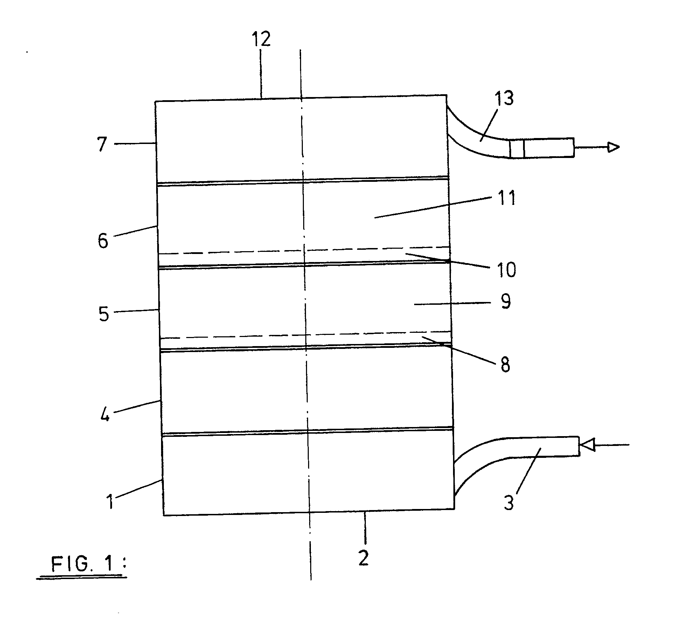

Nach Fig. 1 hat die Vorrichtung einen unteren zylinderförmigen Ring 1 mit Boden 2 und einem Zulauf 3 für das Abgaskondensat. Auf dem Ring 1 sitzen weitere Ringe 4, 5, 6 und 7. Der Ring 5 hat einen siebartigen Boden 8, auf dem Aktiv-Kohle 9 angeordnet ist. Der Ring 6 hat einen siebartigen Boden 10, auf dem ein makroporöses, granuliertes, schwachsaures Kationenaustauscherharz 11 auf Carbonsäurebasis in der Dinatriumionen-Beladungsform oder in Dinatriumionen- und Wasserstoffionen-Beladungsform angeordnet ist. Der Ring 7 hat einen Deckel 12 und einen Ablauf 13 für das neutralisierte und gereinigte Kondensat.

Das im Schornstein bzw. im Kessel anfallende Rauchgaskondensat eines Wärmeerzeugers wird über den Zulauf 3 dem als Absetzbecken dienenden unteren Ring 1 im Aufstrom zugeführt, in dem sich die im Abgaskondensat enthaltenen festen Stoffe aufgrund der Schwerkraft absetzen. Der Ring 2 dient als Leerring zur Anpassung der Höhe des Behälters an die jeweiligen örtlichen Gegebenheiten.

In der Aktiv-Kohle 9 des Ringes 5 werden die im Abgaskondensat enthaltenen Leichtstoffe adsorbiert.

In dem Kationauaustauscherharz 11 des Ringes 6 erfolgt sowohl die Neutralisation als auch die Abbindung der gelösten Schwermetalle. Die Dinatriumionen- und Wasserstoffionen-Beladungsform des Kationenaustauscherharze 11 stellt von Anfang an einen pH-Wert des gereinigten Kondensates unter 8,5 sicher.

Durch Einsatz weiterer Ringe kann die Vorrichtung an die Menge des zu reinigenden und zu neutralisierenden Abgaskondensates angepaßt werden. Die Kationenaustauscherharze können entweder deponiert oder regeneriert werden. Darüber hinaus kann die Vorrichtung auch aus einer verrottbaren Patrone unterschiedlichen Inhalts und unterschiedlicher Abmessungen bestehen, die bei Erschöpfung der Kationaunaustauscherharze entsorgt wird.

Vorteilhaft kann in der Ablaufleitung 13 ein Indikatorring eingesetzt sein, welcher durch Farbreaktionen die Erschöfung des Kationenaustascherharzes 11 anzeigt. Es ist auch möglich, Indikatorharze einzusetzen, welche gleichfalls durch Farbreaktionen die Erschöfung des Kationenaustauscherharzes anzeigen.

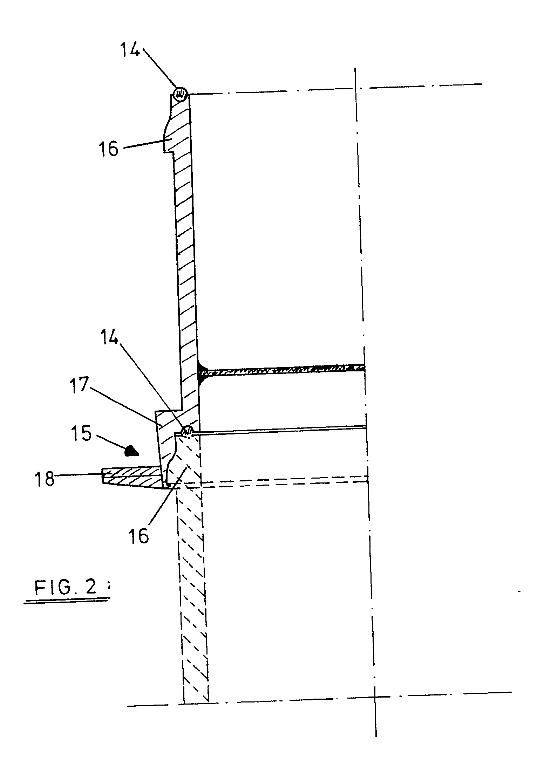

Nach Fig. 2 weisen die Ringe an ihrer Oberseite umlaufende Dichtungen 14 auf und sind durch eine Schnappverbindung 15 an der einander zugeordneten Unterseite bzw. Oberseite miteinander verbindbar. Die Schnappvorrichtung 15 besteht an der Oberseite der Ringe aus am Ringumfang an mehreren Stellen symmetrisch angeordneten Wulsten 16, die von der an der Unterseite des zugeordneten Ringes angeordneten Laschen 17 übergriffen werden. An der Lasche 17 angeordnete Stege 18 erlauben das leichte Lösen der Schnappverbindung 15.

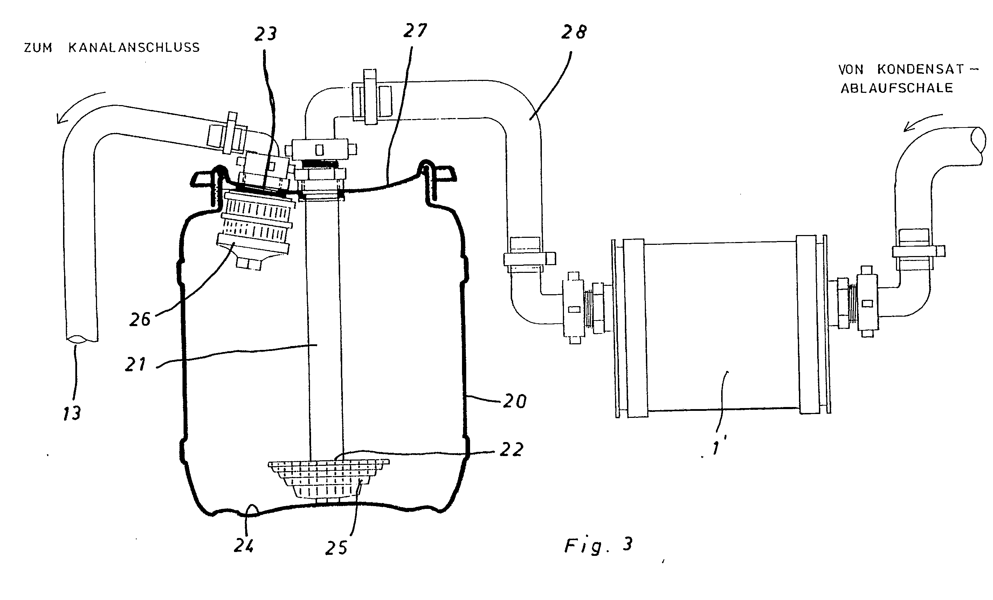

Bei der Ausführungsform einer erfindungsgemäßen Vorrichtung zur Durchführung des Verfahrens nach Fig. 3 ist ein Behälter 20 zur Aufnahme des Kationenaustauscherharzes 11 vorgesehen. Der Behälter 20 hat einen oberen Deckel 27, der lösbar (Schraubgewinde) mit dem Behälter verbunden ist. In den Deckel 27 ist ein Zulauf 21 eingesetzt, der mit seiner unteren Einlauföffnung 22 bis nahe zum Behälterboden 24 ragt. Auf der Einlauföffnung 22 des Zulaufes 21 sitzt ein trichterartig sich verbreiternd ausgebildetes Sieb 25.

Im Deckel 27 ist weiterhin eine Austrittsöffnung 23 vorgesehen, die mit einem Sieb 26 verbunden ist.

Das zu reinigende Abgaskondensat gelangt von der Kondensatablaufschale eines Schornsteins zunächst zu einem Absetzbecken 1', in dem sich Rußpartikel od.dgl. absetzen. Vom Absetzbecken 1' gelangt das zu reinigende Kondensat über eine Rohrleitung 28 zum Zulauf 21 und tritt über das Sieb 25 in den Behälter 20 ein. Das Kondensat kann nun vom Behälterboden 24 nach oben aufsteigen und über das Sieb 26 und die Austrittsöffnung 23 einem Ablauf 13 zugeführt werden.

Im Absetzbecken 1' kann Aktiv-Kohle, ein Kohlefilter od. dgl. angeordnet sein.

Behälter 20, Zulauf 21, die Siebe 25 und 26 sowie die verwendeten Rohreinleitungen sind handelsübliche Bauelemente, so daß die Vorrichtung kostenkünstig hergestellt werden kann.

Das Absetzbecken 1' findet nur Verwendung bei rußhaltigen Abgaskondensaten. Bei rußfreien Abgaskondensaten, beispielsweise bei mit gasförmigen fossilen Brennstoff betriebenen Feuerstätten kann das Absetzbecken entfallen.

Das vorgeschlagene Verfahren bzw. die vorgeschlagenen Vorrichtungen sind äußerst wartungsarm. Es ist lediglich notwendig, gelegentlich das Kationenaustauscherharz zu ersetzen, das beispielsweise in einfacher Weise durch Austausch des Behälters 20 erfolgen kann, so daß eine sichere Entsorgung gewährleistet ist.

**Patentansprüche**

1. Verfahren zur Reinigung und Neutralisation von Abgaskondensaten von häuslichen, mit fossilen Brennstoffen bei vorwiegend niedrigen Abgastemperaturen betriebenen Feuerstätten, dadurch gekennzeichnet, daß die Abgaskondensate einem schwachsauren Kationenaustauscherharz (11) auf Carbonsäurebasis in der Dinatriumionen-Beladungsform zugeführt werden.

2. Verfahren nach Anspruch 1, gekennzeichnet durch ein makroporöses Kationenaustauscherharz (11).

3. Verfahren nach Anspruch 1 oder 2, dadurch gekennzeichnet, daß das Abgaskondensat zunächst Aktiv-Kohle (9) und dann dem Kationenaustauscherharz (11) zugeführt wird.

4. Verfahren nach einem der Ansprüche 1 bis 3, dadurch gekennzeichnet, daß das Abgaskondensat zunächst einem Absetzbecken (1, 1') zugeführt wird.

5. Verfahren nach einem der Ansprüche 1 bis 4, dadurch gekennzeichnet, daß das Abgaskondensat im Aufstrom dem Kationenaustauscherharz (11) und/oder der Aktiv-Kohle (9) zugeführt wird.

6. Verfahren zur Durchführung des Verfahrens nach einem der Ansprüche 1 bis 5, gekennzeichnet durch ein unteres Absetzbecken (1) mit einem Zulauf (3) für das Abgaskondensat, darüber im Abstand angeordnete Aktiv-Kohle (9), ein darüber im Abstand angeordnetes Kationenaustauscherharz (11) und einen oberen Ablauf (13) für das gereinigte und neutralisierte Abgaskondensat.

7. Vorrichtung nach Anspruch 6, dadurch gekennzeichnet, daß die Vorrichtung zylinderförmige, dicht aufeinander setzbare Ringe (1, 4 - 7) hat, von denen einige siebartige Böden (8, 10) zur Aufnahme der Aktiv-Kohles (9), des Kationenaustauscherharzes (11) od.dgl. haben und von denen ein unterer Ring (1) und ein oberer Ring (7) einen Boden (2) bzw. Deckel (12) und einen Zulauf (3) bzw. einen Ablauf (10) haben.

8. Vorrichtung nach Anspruch 7, dadurch gekennzeichnet, daß die Ringe (1, 4 - 7) durch umlaufende Dichtungen (14) mit Hilfe von Schnappverbindungen (15), Bajonettverschlüssen od.dgl. dicht aufeinandersetzbar sind.

9. Vorrichtung zur Durchführung des Verfahrens nach einem der Ansprüche 1 bis 5, gekennzeichnet durch einen Behälter (20) zur Aufnahme des Kationenaustauscherharzes (11) mit einem von der Behälteroberseite bis nahe zum Behälterboden (24) reichenden Zulauf (21) mit einer unteren Einlauföffnung (22) in den Behälter für das zulaufende Kondensat und mit einer oberen Austrittsöffnung (23) für das neutralisierte Kondensat.

10. Vorrichtung nach Anspruch 9, dadurch gekennzeichnet, daß an der Einlauföffnung (22) und/oder der Austrittsöffnung (23) Siebe (25, 26) angeordnet sind.

11. Vorrichtung nach Anspruch 10, dadurch gekennzeichnet, daß das Sieb (25) an der Einlauföffnung (22) sich trichterförmig verbreiternd ausgebildet ist.

12. Vorrichtung nach einem der Ansprüche 9 bis 11, dadurch gekennzeichnet, daß sowohl der Zulauf (21) als auch die Austrittsöffnung (23) in einem mit dem Behälter (20) lösbar verbundenen Deckel (27) angeordnet sind.

FIG. 1 :

FIG. 2 :

ZUM KANALANSCHLUSS

23    27    28

VON KONDENSAT –
ABLAUFSCHALE

26

13    21    20

24    25    22

1'

Fig. 3

EP 0 436 832 A1

# EUROPÄISCHER RECHERCHENBERICHT

Nummer der Anmeldung

**EP 90 12 3198**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 730 863  (VETTER)<br>* Spalte 2, Zeile 64 - Spalte 3, Zeile 14 *<br>— — — | 1 | B 01<br>J 39/04<br>B 01 J 47/00<br>F 24 H 8/00 |
| A | | 4 | |
| Y | DE-A-2 409 261  (ROHM & HAAS)<br>* Seite 14, Patentansprüche 1-5 *<br>— — — | 1 | |
| A | | 2 | |
| A | DE-A-1 517 364  (ASAHI)<br>* Seite 2 *<br>— — — | 1 | |
| A | FR-A-1 340 516  (ZWICKY)<br>* Seite 2, Zusammenfassung *<br>— — — | 7 | |
| A | FR-A-1 155 259  (SOC. D'ETUDE DE VEHICLES)<br>* Seite 2 *<br>— — — | 7 | |
| A | AU-A-6 097 3  (T.S.G. LTD)(1965)<br>* Seiten 6-7 *<br>— — — | 9,10,12 | |
| A | GB-A-1 191 884  (UNION TANK CAR CO.)<br>* Seite 3, Zeile 105 - Seite 4, Zeile 55 *<br>— — — | 9-12 | **RECHERCHIERTE SACHGEBIETE (Int. Cl.5)** |
| A | EP-A-0 228 569  (SCHOTT RUHRGLAS)<br>* Spalte 4, Zeile 52 - Spalte 6, Zeile 6 *<br>— — — | 6 | B 01 J<br>F 24<br>H |
| A | DE-A-3 243 988  (KRUPP)<br>* Seiten 1,2, Patentansprüche 1-8 *<br>— — — — — | 5,9 | |

Der vorliegende Recherchenbericht wurde für alle Patentansprüche erstellt

| Recherchenort | Abschlußdatum der Recherche | Prüfer |
|---|---|---|
| Den Haag | 28 März 91 | WENDLING J.P. |